# FASCICULE DE BREVET EUROPEEN

(11) **EP 1 407 956 B1**
(45) Date de publication et mention de la délivrance du brevet: **21.06.2006**
(21) Numéro de dépôt: 03380220.8
(22) Date de dépôt: 06.10.2003
(51) Int. Cl.: B62B 3/14, B62B 3/16, A45C 3/04, B65D 1/38

(54) **Panier-poussette des courses**
Fahrbarer Einkaufskorb
Drivable shopping basket

(30) Priorité: 08.10.2002 ES 200300295
(43) Date de publication de la demande: 14.04.2004
(73) Titulaire: Inmobiliaria Masife, S.L., 50020 Zaragoza (ES)
(72) Inventeur: Simon Fleta, D. Mariano, 50020 Zaragoza (ES)
(74) Mandataire: Manzano Cantos, Gregorio

(56) Documents cités:
- FR-A- 2 006 095
- GB-A- 661 981
- US-A- 5 469 986
- US-A- 5 692 761

## Description

Ce mémoire descriptif comme il est indiqué dans son énoncé, concerne un panier-poussette destiné à l'utilisation lors des courses habituelles par les propres clients dans les grandes surfaces ou supermarchés, ces établissements étant des self-services, le panier-poussette dispose d'anses pour l'usage manuel et en outre, des jeux de roues au fond avec une anse d'entraînement pour sa fonction à mode de poussette, de manière à pouvoir être facilement transporté, surtout lorsque le poids du contenu du panier est élevé, au moyen de l'appui et de la rotation des roues, avec la poussée pourvue par l'utilisateur à travers une anse de traction, tel que contenu dans le brevêt US 1,689,448 qui décrit l'état de la technique le plus proche. Le Modèle d'utilité ES U-9400303 décrit un panier de courses qui peut être pratiqué de la manière habituelle au moyen de la saisie des anses. L'objet de l'invention peut donc être regardé comme prévoir un panier-poussette dont aussi bien les anses de saisie que l'anse d'entraînement, peuvent être ramassée entre elles, en formant un panier propre permettant l'empilement d'un panier sur l'autre.

Il existe sur le marché une multitude de paniers des courses dans les self-services, en prédominant ceux constitués en matière plastique rigides, rectangulaires et empilables, tel comme on peut remarquer les Modèles d'utilité espagnoles N° ESU-9400 303 «Panier amélioré» et N° ESU-9502610 «Panier rectangulaire à anses amélioré», dont le demandeur et le titulaire, est la même personne physique que l'inventeur actuel de ce nouveau brevet, allant être découvert à la suite et aussi que le brevet US-A-5 469 986 (JANG KEUN H) 28/11/1995 «FRUIT BOX« ; et ainsi que ceux en plastique semi-flexibles ayant un fond à surface ovale en sorte de sac classique et on emploie aussi en moindre mesure des paniers en matières tissées, ainsi qu'en joncs, osiers, etc., tel que le brevet US-A-1 689 448(MOYNAHAN) 30/03/1927 «SHOPPING BASKET« , ceux-ci étant tombés en désuétude étant donné leur fabrication artisanale et très élaborée.

Bien que tous les modèles d'utilisation et brevets ici indiqués accomplissent leur fonction, cela se complique lorsque les articles déposés dans le panier des courses supposent plusieurs kilos de poids, ce qui entraînent des ennuis et des efforts.

### DESCRIPTION DE L'INVENTION

Le panier-poussette des courses ici préconisé, a été conçu pour résoudre la problématique exposée, le propre panier, est décrit avec une figure rectangulaire avec des lignes tronconiques, des parois allégées au moyen d'orifices de différentes figures, en disposant sur son périmètre d'un cadre sur lequel émergent des oreilles pour articuler les anses pour les positionner soit pour les saisir de la part de l'utilisateur, soit pour les appuyer sur le propre cadre du panier, et en étant donné sa double nature de panier et de poussette, et selon l'inventeur, il comporte aux extrémités du fond du panier des roulettes, supportées par des logements respectifs, leurs axes étant encastrés à pression, ce qui permet de tourner librement, tandis que du côté opposé sur son cadre supérieur décrit ci-dessus, on met en place essentiellement et latéralement une anse unique de traction sous forme de "U", dont les extrémités sont articulées sur l'extérieur du cadre, de manière qu'en position de pliage, l'anse de traction repose sur l'extérieur du cadre du panier, qui au moyen de la rotation de l'anse de traction, demeure en position de roulement de l'ensemble panier-poussette et marchandise. Pour niveler la petite hauteur que suppose les roulettes du panier, on ajoute des appuis équilibreurs sur la partie contraire du fond du panier, ou optionnellement on applique un autre jeu de roulettes.

### DESCRIPTION DES DESSINS

Pour compléter la description en cours et afin d'aider à une meilleure compréhension des caractéristiques de l'invention, un jeu de dessin accompagne celle-ci en tant que partie intégrante, où à caractère illustratif et non pas limitatif on a représenté ce qui suit :

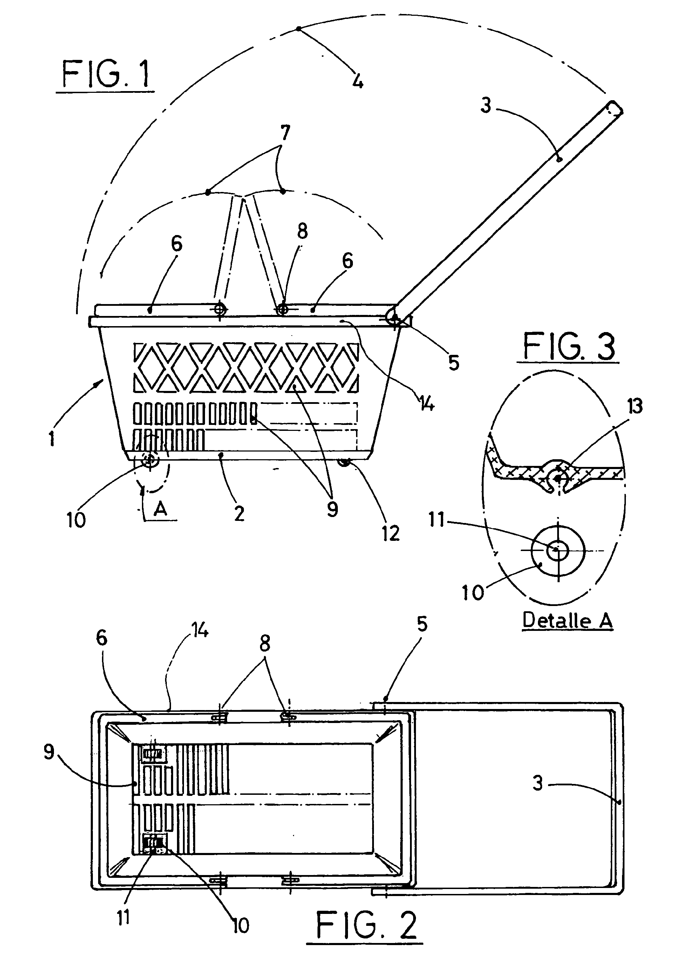

La figure 1, montre une vue de face de l'ensemble panier-poussette des courses, en y observant le jeu d'anses (6) manettes reposant sur le cadre (14) avec la course (7) et à sa position de course, dessinées en pointillé sur son point (8) de rotation, en incorporant une anse (3) de traction en position de transport et en marquant le rayon de rotation avec la référence (4). À une extrémité du fond du corps du panier (2), on observe les roulettes (10), introduites à pression sur les logements (13), tandis qu'à l'autre extrémité apparaissent les appuis (12) de nivellement, qui optionnellement peuvent aussi être remplacés par un autre jeu de roulettes (10) avec les mêmes caractéristiques que les antérieures.

La figure 2, montre une vue en plan de la figure antérieure où apparaît le panier avec les deux axes (8) d'articulation des anses (6), et également l'axe (5) d'articulation, correspondant à l'anse (3) de traction, sur le cadre (14), tout comme la disposition des roulettes (10), avec leurs axes (11) de rotation adaptées sur le fond du panier.

Finalement, la figure 3 est le détail de fixation de l'axe (11) et des roulettes (10) dans les logements (13) du fond du corps du panier (2).

Ces figures ont été mises en rapport avec les références numériques suivantes:
1.- Ensemble panier-poussette des courses.
2.- Corps du panier.
3.- Anse de traction panier-poussette.
4.- Arc de course de l'anse de traction.
5.- Axe de rotation de l'anse de traction.
6.- Anse manette de panier.
7.- Arc de course de l'anse manette.
8.- Axe de rotation de l'anse manette.
9.- Orifices décoratifs d'allégement.
10.- Roulettes de déplacement.
11.- Axe de roulette.
12.- Support stabilisateur de panier-poussette.
13.- Logement d'axe de roulettes.
14.- Cadre supérieur du panier.

### REALISATION PREFEREE DE L'INVENTION

D'après ces figures et ces références numériques, on peut observer que le corps (2) de panier est essentiellement tronconique, à plan rectangulaire, disposant d'anses manettes (6) sous forme de "U", articulées aux extrémités de leurs ailes au moyen des axes (8) de rotation et appuyées sur le cadre (14) disposé sur la partie supérieure de l'ensemble du panier (1).

Par ailleurs, sur les latéraux d'une extrémité du cadre (14) du corps (2) du panier, est articulée la nouvelle anse (3) de traction, car à ses extrémités sous forme de "U", sont mis en place les axes (5) de rotation, en permettant lors de sa course (4), un arc de cercle d'environ 135°, son pliage et son déploiement.

Le corps (2) du panier, dispose ou peut avoir sur ses parois et son fond, des orifices (9) ou trous de différentes formes et dimensions qui en outre leur fonction décorative, allégèrent l'ensemble du panier, ce qui entraîne une économie de poids et de matériel.

La présente invention a été conçue, au moyen de la figure régulière à base rectangulaire avec prolongation dans un polygone tronconique, cette base pouvant être à figure différente, prismatique, conique, cylindrique, etc en adoptant dans ce cas les anses (6 et 3) correspondantes à la configuration correspondante.

Les matières de tous les composants seront en plastique injecté, recyclés ou vierges, bien qu'ils puissent être susceptibles de varier, comme il a été exposé ci-dessus, en forme et dimension des différentes pièces, si toutefois cela ne suppose pas une modification de l'essentiel de l'invention.

La nature de l'invention ayant été suffisamment décrite, en tenant compte des termes de sa rédaction, ceux-ci devront être pris dans un sens large et non pas limitatif, tout comme la description du mode de mise en oeuvre, en prouvant qu'elle constitue une avance technique positive dans la fabrication de panier-poussettes des courses, on demande le dépôt de Modèle d'utilité pour dix ans en Espagne, l'essentiel de ladite invention étant spécifié à la suite:

## Revendications

1. Panier-poussette des courses, du type de ceux utilisés dans les établissements self-service, où l'utilisateur garde les produits sélectionnés et il les transporte jusqu'à la caisse de paiement des produits, pour, à la suite, les empiler l'un sur l'autre, la matière employée pour sa fabrication étant de la matière plastique, par une disposition de l'ensemble de panier (1) à base rectangulaire avec prolongation ascendante à figure tronconique, au moyen des parois et du fond du corps (2)du panier, auxquels on ménage des orifices ou trous vides (9), le panier disposant sur sa partie supérieure d'un cadre (14) encadrant tout son périmètre, qui comporte sur sa base supérieure un jeu d'anses manettes (6), à figure sous forme de "U", articulées sur des points (8) de rotation, qui lui permettent la course (7) et **qu'**en correspondance avec les latéraux de l'une des extrémités de ce cadre (14), est articulée une anse (3) de traction, également sous forme de "U" à travers des points (5) de rotation, en permettant la course (4) dans un arc de cercle d'environ 135°son pliage et son déploiement, pour la traction moyennant un jeu de roulettes (10) dudit panier-poussette au fond de celui-ci et en position de pliage, l'anse de traction (3) repose sur l'extérieur du cadre de panier ou est appuyée sur le propre cadre du panier.

2. Panier-poussette des courses, selon la première revendication, qui est **caractérisé par** le fait de disposer sur la paroi du fond du corps (2) du panier à l'extrémité opposée à celui où est l'anse (3) de traction, d'un jeu de roulettes (10), portées sur un axe (11), qui est emboîté dans le logement (13) disposé à l'extérieur du fond du panier, en ayant du coté opposé à ces roulettes, des appuis (12) de nivellement, ou optionnellement ces appuis peuvent être remplacés par des jeux de roulettes (10), encastrées de manière identique aux antérieures dans les logements (13) correspondants.

## Claims

1. A shopping basket-type cart, of the type used in self-service establishments, in which the user stores the selected goods and transports them to the cash register to pay for the goods, to subsequently be stacked one on top of the other, the material used for manufacturing them being plastic, the basket (1) assembly having a rectangular base with an upward extension with a frustoconical shape by means of the walls and bottom of the basket body (2) where openings or gaps (9) are made, the basket having on its upper portion a border (14) surrounding its entire perimeter, having on its upper base a set of U-shaped handles (6), hinged on rotational points (8) allowing them to travel path (7), and on the sides of one of the ends of this border (14), an also U-shaped pull handle (3) is accordingly hinged through rotational points (5), the path (4) in a circumferential arc of about 135° allowing its folding and deployment in order to pull said cart-type basket by means of a set of small wheels (10) arranged on the bottom thereof, and in the folded position, the pull handle (3) rests outside of the basket border or rests on the basket border itself.

2. A shopping cart-type basket according to claim 1, **characterized by** having on the bottom wall of the basket body (2), on the end opposite to the one where the pull handle (3) is arranged, a set of small wheels (10) supported on a shaft (11) which is introduced in the housing (13) arranged on the outside of the bottom of the basket, the side opposite to these small wheels having leveling supports (12), or these supports optionally being able to be replaced with sets of small wheels (10), inserted in the corresponding housings (13) the same manner as the previously mentioned ones.

## Patentansprüche

1. EINKAUFSKORBWAGEN, der Art, die in Selbstbedienungsläden verwendet werden, in denen der Benutzer die ausgewählten Produkte lagert und diese bis zur Kasse für die Bezahlung der Produkte transportiert, und die anschließend einer auf dem anderen gestapelt werden, wobei bei der Herstellung Kunststoff verwendet wird und die Anordnung der Einheit des Korbs (1) eine rechteckige Grundfläche aufweist, mit einer nach oben verlaufenden Verlängerung, die durch die Wände und den Boden des Korbkörpers (2) kegelstumpfförmig ausgebildet ist, wobei in den Wänden Öffnungen oder ausgehöhlte Löcher (9) eingebracht sind und wobei der Korb am oberen Teil einen Rahmen (14) aufweist, der den gesamten Umfang umrahmt, der an seiner oberen Grundfläche einen Satz U-förmiger Handgriffe (6) aufweist, die an Drehpunkten (8) angelenkt sind, die den Weg (7) erlauben, wobei an den Seiten eines der Enden dieses Rahmens (14) an Drehpunkten (5) ein Griff zum Ziehen (3) angelenkt ist, der ebenfalls U-förmig ausgebildet ist, wobei der Weg (4) über einen Umfangsbogen von ungefähr 135° das Ein- und Ausklappen dieses Griffs ermöglicht, um über einen Satz von am Boden des Einkaufskorbwagens angeordneten Rädchen (10) das Ziehen desselben zu ermöglichen, und wobei sich der Griff zum Ziehen (3) in der eingeklappten Position außerhalb des Korbrahmens abstützt oder sich auf dem eigentlichen Rahmen des Korbs abstützt.

2. EINKAUFSKORBWAGEN nach dem ersten Anspruch, **dadurch gekennzeichnet, dass** auf dem Boden des Korbkörpers (2) an dem Ende, das dem Griff zum Ziehen (3) gegenüber liegt, ein Satz Rädchen (10) angeordnet ist, die von einer Achse (11) getragen werden, die in eine außerhalb des Korbbodens angeordnete Aufnahme (13) eingepasst ist, wobei die diesen Rädern gegenüberliegende Seite Nivellierungsauflagen (12) aufweist, oder diese Auflagen nach Wahl durch Rädersätze (10) ersetzt werden können, die genauso wie die vorgenannten in die entsprechenden Aufnahmen (13) eingepasst sind.
